# EUROPEAN PATENT SPECIFICATION

(11) **EP 2 189 309 B1**
(45) Date of publication and mention of the grant of the patent: **16.03.2011**
(21) Application number: 08425755.9
(22) Date of filing: 25.11.2008
(51) Int. Cl.: B60G 3/24, B60K 17/22, B60K 17/30

(54) **Suspension system for a driven axle of a vehicle**
Aufhängungssystem für eine Antriebsachse eines Fahrzeugs
Système de suspension pour un essieu entraîné d'un véhicule

(43) Date of publication of application: 26.05.2010
(73) Proprietor: C.R.F. Società Consortile per Azioni, 10043 Orbassano (Torino) (IT)
(72) Inventor: Asteggiano, Valter, 10043 Orbassano (Torino) (IT)
(74) Representative: Notaro, Giancarlo

(56) References cited:
- CH-A- 222 405
- DE-C- 361 300
- DE-U1- 9 311 077
- US-A- 1 726 615
- US-A- 2 012 202
- US-A- 3 155 186
- US-A- 3 162 262
- US-A- 4 042 260
- US-A- 4 200 165
- US-A- 6 056 304
- US-A1- 2006 234 567

## Description

The present invention relates to a suspension system for the driven axle of a vehicle, particularly (but not exclusively) for an agricultural machine or an earth-moving machine, of the type comprising, for each wheel, a parallelogram connection, with oscillating transverse arms, which connects a wheel support to a structure of the vehicle, wherein said parallelogram connection includes a top arm and a bottom arm both articulated at their ends to said wheel support and to said structure of the vehicle, with a shock-absorbing assembly operatively set between said parallelogram connection and said vehicle structure, and wherein set adjacent to said arms is an axle shaft for connection of the wheel to the engine unit of the vehicle.

A suspension system of the type referred to above is, for example, described and illustrated in EP 0 960 761 A2. Suspension systems of this type are also disclosed in US-A3 162 262, US-A-3 155 186, CH 222 405 A and US-A-4 200 165, each of which shows a tubular swing axle extending between the two wheels and having the two axle-shafts set inside the tubular axle members.

A suspension system as per the preamble of claim 1 is disclosed in DE 361300 C.

In designing suspension systems of the type referred to above, it is required to guarantee the necessary ranges of action in a vertical direction of the wheels, both when the vehicle is travelling on the road and when the vehicle is travelling off the road, as is precisely the case of agricultural machines or earth-moving machines.

In order to meet said needs in an optimal way, there have also been proposed suspension systems that envisage a rigid central axle portion, which is mounted oscillating about a longitudinal central axis on the load-bearing structure of the vehicle and connected on the opposite ends of which are the articulated parallelograms carrying the wheels of the vehicle. When the vehicle travels on road, any possibility of oscillation of the rigid central part of the axle is prevented, so that the vertical movements of the wheels are entrusted only to the articulated parallelograms associated to the ends of the central axle part. When, instead, the vehicle is travelling off the road, the central part is left free to oscillate so as to enable ample movements of the wheels in a vertical direction.

Said known solutions present, however, the drawback of being relatively complex and costly and of leading to a relatively low position of the bottom arm with respect to the ground and consequent exposure of the axle shaft to impact against obstacles present in the field and/or to the danger of getting entangled in cables or tall stems of crops that wrap around it.

The object of the present invention is to overcome the aforesaid drawbacks.

With a view to achieving said object, the subject of the invention is a suspension system having all the characteristics set forth in claim 1.

Thanks to the aforesaid characteristic, the suspension system according to the invention, albeit preserving all the advantages of the known solutions, does not re-present the drawbacks thereof in so far as each axle shaft is protected within the hollow shaft constituting the bottom oscillating arm, whilst, at the same time, a greater height from the ground is generated by the displacement of said arm upwards.

In a first embodiment, the aforesaid vehicle structure to which the parallelogram connection is connected is the load-bearing structure of the vehicle. In a second embodiment, the vehicle structure to which the parallelogram connection is connected is a rigid central axle portion, which is mounted oscillating about a longitudinal central axis on the load-bearing structure of the vehicle. According to a solution in itself known, the rigid central axle portion can be provided with means designed to prevent oscillation thereof about said central axis. In the case of said solution, when the vehicle travels on the road, the oscillation of the rigid central axle portion can be blocked so that the vertical movements of the wheels are entrusted only to the articulated-parallelogram connections, whereas, when the vehicle is operating off the road, oscillation of said rigid central axle portion is again enabled. As already mentioned, however, the invention is applicable also to traditional suspensions of the type with oscillating arms.

Further characteristics and advantages of the invention will emerge from the ensuing description with reference to the annexed drawing, which is provided purely by way of non-limiting example and illustrates a. schematic perspective view of one half of the suspension system according to the invention (the other half being symmetrical and specular with respect to the one illustrated).

With reference to the figure, number 1 designates as a whole a rigid central portion of a front axle of an agricultural tractor, which is supported in an oscillating way about an axis 2, parallel to the longitudinal direction of the vehicle, on the load-bearing structure 3 of the vehicle, illustrated only schematically in the drawing. In a preferred embodiment, the vehicle comprises means (not illustrated) for blocking the central rigid portion 1 with respect to the load-bearing structure 3, preventing the aforementioned oscillation about the axis 2. Said means are not described or illustrated herein in so far as they can be made in any known way and, taken in themselves, do not fall within the scope of the present invention. Elimination of said items from the drawings moreover renders the latter more readily and easily understandable.

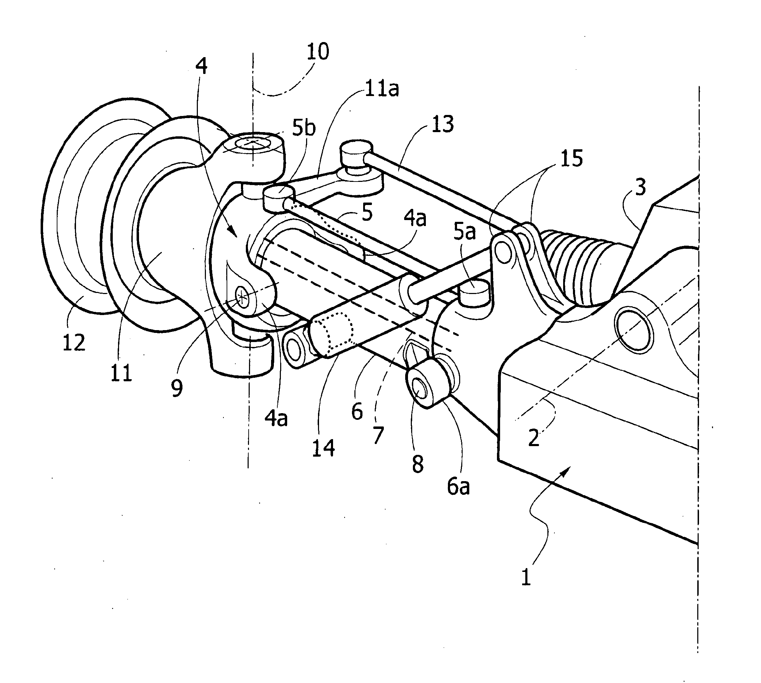

Each end of the rigid central axle portion 1 supports a respective wheel support 4 by means of an articulated-parallelogram system, including a top oscillating transverse arm 5 and a bottom oscillating transverse arm 6. The arm 5 is constituted by a conventional rod, the ends of which are connected by means of articulated joints 5a, 5b, respectively, to one end of the rigid-axle portion 1 and to the wheel support 4. According to the invention, the bottom arm 6 of each of the two articulated-parallelogram connections is instead made in the form of a hollow shaft, in such a way as to enable the axle shaft (illustrated only schematically with a dashed line in Figure 7) to be set inside it. In this way, said axle shaft is protected from any possible risk of damage resulting from impact with the ground. The structure of the axle shaft is not described or illustrated herein in so far as also this may be made in any known way and, taken in itself, does not fall within the scope of the present invention.

The hollow shaft constituting the oscillating arm 6 has, at its end facing the central portion 1, a forklike conformation, with two branches 6a (only one of which may be seen in the drawing) that are mounted articulated on the respective end of the central portion 1 by means of articulation pins 8 set substantially in a direction parallel to the longitudinal direction of the vehicle. The opposite end of the hollow shaft 6 is connected in an articulated way to the wheel support 4 by means of two lugs 4a projecting from the wheel support 4 and extending on the two sides of the hollow shaft 6. The articulated connection is provided by means of pins 9, which are also oriented parallel to the longitudinal direction of the vehicle. According to the conventional technique, each support 4 in turn carries, oscillating about a substantially vertical axis 10, a further support 11 carrying the wheel pin (not visible in the drawing), on which the wheel 12 (illustrated only schematically and without a tyre) is rotatably mounted. The support 11 incorporates an actuation arm 11a controlled by the steering-wheel device of the vehicle by means of a rod 13. A shock absorber 14 is set between the oscillating arm 6 shaped like a hollow shaft and a pair of brackets 15 forming part of the structure of the rigid portion 1. The shock absorber 14 has its stem articulated to the brackets 15, and its body having its opposite end articulated to an appendage of the structure of the hollow shaft 6.

From the foregoing description, it emerges clearly that the basic idea of the invention is to provide a suspension with oscillating transverse arms, where the bottom arm is made in the form of a hollow shaft and contains inside it the respective axle shaft that connects the wheel to the engine unit of the vehicle.

It is evident that, even though the invention has been illustrated herein with reference to a case of "hybrid" suspension, comprising a rigid central axle portion 1 mounted oscillating about a longitudinal axis 2 and two pairs of transverse oscillating arms 5, 6, it is applicable also to any suspension system with transverse oscillating arms, where said arms are directly connected to the load-bearing structure 3 of the vehicle, without the provision of a central rigid portion 1 mounted oscillating about a longitudinal axis.

The details of construction and the embodiments may vary widely with respect to what is described and illustrated herein, without thereby departing from the scope of the present invention, as defined by the claims.

## Claims

1. A suspension system for the driven axle of a vehicle, particularly for an agricultural machine or an earth-moving machine, of the type comprising for each wheel (12) a parallelogram connection (5, 6), with oscillating transverse arms, which connects a wheel support (4) to a structure (1; 3) of the vehicle, wherein said parallelogram connection includes a top arm (5) and a bottom arm (6), both of which are articulated at their ends to said wheel support (4) and to said structure (1) of the vehicle, with a shock-absorbing assembly (14) operatively set between said parallelogram connection (5, 6) and said vehicle structure (1), and wherein set adjacent to said arms is an axle shaft (7) for connection of the wheel to the engine unit of the vehicle, wherein the two bottom oscillating arms (6) associated to the two wheels (12) of the axle are substantially in the form of two hollow shafts (6) each having a respective axle shaft (7) set inside it, and where in said axle is a steering axle and in that said wheel support (4) to which the articulated parallelogram (5,6) is connected in turn supports in an orientable way the wheel pin, which is operatively connected to a steering linkage (11a,13)
said suspension system being **characterized in that** each of the two hollow shafts (6) has its end facing towards the central portion of the vehicle which is articulated to said structure (1;3) of the vehicle by means of two articulation pins (8) set substantially in a direction parallel to the longitudinal direction of the vehicle, the opposite end of each hollow shaft (6) being articulated to the wheel support (4) by means of two articulation pins (9), which are also oriented parallel to the longitudinal direction of the vehicle.

2. The suspension system according to Claim 1, **characterized in that** said vehicle structure to which the parallelogram connection is connected is the load-bearing structure (3) of the vehicle.

3. The suspension system according to Claim 1, **characterized in that** said vehicle structure to which the parallelogram connection is connected (5, 6) is a rigid central axle portion (1), which is mounted oscillating about a longitudinal central axis (2) on the load-bearing structure (3) of the vehicle.

## Patentansprüche

1. Aufhängungssystem für die angetriebene Achse eines Fahrzeugs, insbesondere für eine Landwirtschaftsmaschine oder eine Erdbewegungsmaschine des Typs, der für jedes Rad (12) eine Parallelogrammverbindung (5, 6) mit schwingenden Querlenkern umfasst, die einen Radträger (4) mit einer Struktur (1; 3) des Fahrzeugs verbindet, wobei die Parallelogrammverbindung einen oberen Arm (5) und einen unteren Arm (6) enthält, die beide an ihren Enden an dem Radträger (4) und der Struktur (1) des Fahrzeugs angelenkt sind, eine Stoßdämpfanordnung (14) funktional zwischen die Parallelogrammverbindung (5, 6) und die Radstruktur (1) eingesetzt ist und an die Arme angrenzend eine Achswelle (7) zur Verbindung des Rades mit der Motoreinheit des Fahrzeugs angeordnet ist, die zwei unteren Schwingarme (6), die mit den zwei Rädern (12) der Achse verbunden sind, im Wesentlichen die Form von zwei Hohlwellen (6) haben, die jeweils eine entsprechende Achswelle (7) aufweisen, die in ihrem Inneren angeordnet ist, die Achse eine Lenkachse ist und der Radträger (4), mit dem das Gelenk-Parallelogramm (5, 6) verbunden ist, seinerseits ausrichtbar den Radzapfen trägt, der funktional mit einem Lenkgestänge (11a, 13) verbunden ist,
wobei das Aufhängungssystem **dadurch gekennzeichnet ist, dass** das Ende jeder der zwei Hohlwellen (6), das dem Mittelabschnitt des Fahrzeugs zugewandt ist und an der Struktur (1; 3) des Fahrzeugs mittels zweier Gelenkzapfen (8) angelenkt ist, im Wesentlichen in einer Richtung parallel zu der Längsrichtung des Fahrzeugs angeordnet ist, und das gegenüberliegende Ende jeder Hohlwelle (6) mittels zweier Gelenkzapfen (9), die ebenfalls parallel zu der Längsrichtung des Fahrzeugs ausgerichtet sind, an dem Radträger (4) angelenkt ist.

2. Aufhängungssystem nach Anspruch 1, **dadurch gekennzeichnet, dass** die Fahrzeugstruktur, mit der die Parallelogrammverbindung verbunden ist, die lasttragende Struktur (3) des Fahrzeugs ist.

3. Aufhängungssystem nach Anspruch 1, **dadurch gekennzeichnet, dass** die Fahrzeugstruktur, mit der die Parallelogrammverbindung (5, 6) verbunden ist, ein starrer Mittelachsenabschnitt (1) ist, der um eine Längs-Mittelachse (2) schwingend an der lasttragenden Struktur (3) des Fahrzeugs angebracht ist.

## Revendications

1. Système de suspension pour l'essieu moteur d'un véhicule, en particulier pour une machine agricole ou une machine de terrassement, du type comprenant, pour chaque roue (12), une connexion en parallélogramme (5, 6), avec des bras transversaux oscillants, qui relie un support de roue (4) à une structure (1, 3) du véhicule, dans lequel ladite connexion en parallélogramme comprend un bras supérieur (5) et un bras inférieur (6), tous deux étant articulés à leurs extrémités audit support de roue (4) et à ladite structure (1) du véhicule, avec un ensemble absorbeur de choc (14) opérationnellement disposé entre ladite connexion en parallélogramme (5, 6) et ladite structure de véhicule (1) et dans lequel est disposé, de manière adjacente auxdits bras, un arbre d'essieu (7) pour connexion de la roue à l'unité de moteur du véhicule, dans lequel les deux bras oscillants inférieurs (6) associés aux deux roues (12) de l'essieu ont sensiblement la forme de deux arbres creux (6) ayant chacun un arbre d'essieu respectif (7) à l'intérieur de celui-ci, et dans lequel ledit essieu est un essieu de direction et dans lequel ledit support de roue (4), auquel le parallélogramme articulé (5, 6) est raccordé, supporte à son tour de manière orientable la cheville de roue, qui est opérationnellement raccordée à une liaison de direction (11 a, 13),
ledit système de suspension étant **caractérisé en ce que** chacun des deux arbres creux (6) a son extrémité orientée vers la partie centrale du véhicule, qui est articulée à ladite structure (1,3) du véhicule, au moyen de deux broches d'articulation (8) disposées sensiblement dans une direction parallèle à la direction longitudinale du véhicule, l'extrémité opposée de chaque arbre creux (6) étant articulée au support de roue (4) au moyen de deux broches d'articulation (9), qui sont également orientées parallèlement à la direction longitudinale du véhicule.

2. Système de suspension selon la revendication 1, **caractérisé en ce que** ladite structure de véhicule à laquelle la connexion en parallélogramme est raccordée est la structure porteuse de charge (3) du véhicule.

3. Système de suspension selon la revendication 1, **caractérisé en ce que** ladite structure de véhicule à laquelle la connexion en parallélogramme est raccordée (5, 6) est une partie d'essieu central rigide (1), qui est montée en oscillation autour d'un axe central longitudinal (2) sur la structure porteuse de charge (3) du véhicule.
